# EUROPÄISCHE PATENTSCHRIFT

(11) **EP 3 138 395 B1**
(45) Veröffentlichungstag und Bekanntmachung des Hinweises auf die Patenterteilung: **06.06.2018**
(21) Anmeldenummer: 16178621.5
(22) Anmeldetag: 08.07.2016
(51) Int. Cl.: A01K 27/00

(54) **HUNDEGESCHIRR**
DOG HARNESS
HARNAIS POUR CHIENS

(30) Priorität: 17.07.2015 DE 202015103760 U
(43) Veröffentlichungstag der Anmeldung: 08.03.2017
(73) Patentinhaber: Hunter Holding GmbH & Co. KG, 32756 Detmold (DE)
(72) Erfinder: Trautwein, Rolf, 33719 Bielefeld (DE)
(74) Vertreter: Bittner, Thomas L.

(56) Entgegenhaltungen:
- EP-A1- 1 033 075
- EP-A1- 1 656 829
- EP-A2- 2 243 356
- DE-U1-202010 016 578
- US-A1- 2015 164 049

## Beschreibung

Die Erfindung betrifft ein Hundegeschirr.

### Hintergrund

Hundegeschirr dienen zum Führen von Hunden. Sie verfügen üblicherweise über mehreren Riemen oder Gurte, die sich entlang verschiedener Körperteile des Hundes erstrecken. So sind Hundegeschirre bekannt, die einen Schulterriemen, einen Bauchriemen sowie einen Brustriemen aufweisen. Derartige Geschirre sind beispielsweise in den Dokumenten DE 20 2009 007 056 U1 sowie DE 20 2011 050 582 U1 offenbart. Um den Tragekomfort zu erhöhen, weisen die bekannten Hundegeschirre entlang der Riemen abschnittsweise Polsterungen auf.

Das Dokument EP 1 656 829 A1 offenbart ein Hundegeschirr, bei dem Elemente mit eingenähtem Polster und einer Y-Form gebildet sind. Die Y-förmigen Elemente sind im Schulterbereich fest miteinander verbunden, wobei sich über die Verbindung ein gebogenes Griffelement erstreckt.

Aus dem Dokument EP 1 033 075 A1 ist ein Hundegeschirr bekannt, welches einen Bauchriemen, einen Brustriemen und einen Schulterriemen aufweist, wobei die Riemen mittels eines Rings miteinander verbunden sind. Für den Bauch und den Brustriemen sind innenseitige Polsterungen abschnittsweise vorgesehen.

Weitere Hundegeschirre sind aus den Dokumenten US 2015/0164049 A1 sowie DE 20 2010 016 578 U1 bekannt.

### Zusammenfassung

Aufgabe der Erfindung ist es, ein Hundegeschirr mit verbesserten Funktionseigenschaften anzugeben, bei dem insbesondere das körperschonende Tragen des Hundegeschirrs durch den Hund unterstützt wird.

Zur Lösung der Aufgabe ist ein Hundegeschirr nach dem unabhängigen Anspruch 1 geschaffen. Ausgestaltungen sind Gegenstand von abhängigen Unteransprüchen.

Nach einem Aspekt ist ein Hundegeschirr nach Anspruch 1 geschaffen, welches einen Schulterriemen, einen Bauriemen und einen Brustriemen aufweist, wobei der Bauchriemen und der Brustriemen auf gegenüberliegenden Geschirrseiten jeweils über eine Riemenverbindung mit dem Schulterriemen verbunden sind. Abschnitte des Schulterriemens sind mit Hilfe einer lösbaren Verbindung lösbar miteinander verbunden. An dem Schulterriemen ist eine Leinenbefestigung vorgesehen. Das Hundegeschirr weist Polsterelemente auf, die mit einer Y-Form und getrennt voneinander gebildet sind. Auf einer Außenseite in einem proximalen Abschnitt der Polsterelemente ist jeweils ein Abschnitt des Schulterriemens fest angeordnet. Die proximalen Abschnitte der Polsterelemente sind im Bereich des Schulterriemens einander gegenüberliegend angeordnet. Auf der Außenseite in einem distalen Abschnitt der Polsterelemente, der sich von dem proximalen Abschnitt ausgehend erstreckt, ist jeweils ein Abschnitt des Bauchriemens freiliegend angeordnet. Auf der Außenseite in einem weiteren distalen Abschnitt der Polsterelemente, der sich von dem proximalen Abschnitt ausgehend erstreckt, ist jeweils ein Abschnitt des Brustriemens freiliegend angeordnet.

Die Polsterelemente erfassen jeweils Abschnitte des Schulterriemens wie auch des Brustriemens und des Bauchriemens. Auch die Verbindung zwischen Schulterriemen einerseits und Bauch- und Brustriemen andererseits ist auf der Außenseite der Polsterelemente angeordnet.

Das feste Anordnen der Abschnitte des Schulterriemens auf dem proximalen Abschnitt des Polsterelements verhindert eine Relativbewegung zwischen Polsterelement und Riemenabschnitt. Beispielsweise kann eine solche feste Anordnung hergestellt werden, indem der Abschnitt des Schulterriemens an dem Polsterelement angenäht wird. Alternativ oder ergänzend kann ein festes Anbringen mittels Nieten und / oder Kleben vorgesehen sein. Im Unterschied hierzu ist bei den freiliegenden Riemenabschnitten auf der Außenseite der distalen Abschnitte der Polsterelemente eine Relativbewegung zwischen Riemenabschnitt und Polsterelement ermöglicht. Beispielsweise kann der Riemenabschnitt auf der Außenseite des Polsterelements verrutschen oder verschoben werden. Auch ein zeitweises Abheben oder Lösen des Riemenabschnitts von der Oberfläche auf der Außenseite kann stattfinden, beispielsweise zum Verstellen der Länge des jeweiligen Riemens.

Die Riemenverbindung des Bauchriemens und des Brustriemens zum Schulterriemen auf den gegenüberliegenden Geschirrseiten kann als eine gemeinsame Riemenverbindung von Brust- und Bauchriemen zum Schulterriemen ausgebildet sein. Beispielsweise kann ein einziger Ring durch eine jeweilige endseitige Schlaufe der drei beteiligten Riemen verlaufen. Es kann vorgesehen sein, dass zum Lösen des jeweiligen Riemens von einer solchen Verbindung die Schlaufe aufzulösen oder zu öffnen ist.

Das Hundegeschirr ermöglicht ein schnelles und bequemes Anlegen am Hundekörper wie Lösen hiervon.

Das Hundegeschirr kann bezüglich einer gedachten vertikalen Mittelebene konstruktiv symmetrisch ausgebildet sein. Dies kann eine spiegelsymmetrische Ausbildung sowohl der Polsterelemente wie auch der Riemen betreffen, einschließlich an den Riemen wahlweise vorgesehener Verstelleinrichtungen, mit denen die Länge des Riemens einstellbar ist.

Zusätzliche Polsterelemente können zwischen einander gegenüberliegenden distalen Abschnitten der Polsterelemente innenliegend an dem Brustriemen sowie an dem Bauchriemen angeordnet sein. Die zusätzlichen Polsterelemente können mittig zwischen gegenüberliegenden Enden der distalen Abschnitte der Polsterelemente an dem jeweiligen Riemen angeordnet sein. Die zusätzlichen Polsterelemente können seitlich des jeweils zugeordneten Riemens überstehen, so dass im Vergleich zur Breite des Riemens die Auflagefläche am Tierkörper vergrößert ist. In ähnlicher Weise, also am Riemen seitlich überstehend, können die Polsterelemente mit der Y-Form ausgebildet sein. Die verschiedenen Polsterelemente können quer zu dem Riemen eine Breite aufweisen, die der doppelten oder der dreifachen Breite des Außen auf dem Polsterelement aufliegenden Riemens entspricht.

Die zusätzlichen Polsterelemente können an dem Brustriemen sowie an dem Bauchriemen fest angeordnet sein. Die feste Anordnung unterbindet eine Relativbewegung zwischen den Riemen und dem zusätzlichen Polsterelement. Die feste Anordnung kann beispielsweise mittels Aufnähen des Polsters auf die Innenseite des Riemens hergestellt sein. Alternativ oder ergänzend kann die Verwendung von Nietverbindungen zwischen Riemen und Polsterelement vorgesehen sein.

Auf der Außenseite im distalen Abschnitt eines oder beider Polsterelemente ist an dem Brustriemen und an dem Bauchriemen jeweils eine Verstelleinrichtung angeordnet sein, die eingerichtet ist, eine jeweilige Riemenlänge zu verstellen. Die Verstelleinrichtung kann mit einer Schnalle gebildet sein.

Der freiliegend angeordnete Abschnitt des Brustriemens und der freiliegend angeordnete Abschnitt des Bauchriemens können auf der Außenseite der Polsterelemente mittels Führungselementen gesichert sein. Die Führungselemente auf der Außenseite des Polsterelements können sich über die gesamte Breite des Polsterelements erstrecken und in einer möglichen Ausführung ein Verschieben des durch das Führungselement geführten Riemenabschnitts von einer Seite zur anderen Seite des Polsterelements auf der Außenseite zulassen. Die Führungselemente können aus einem elastischen oder einem nicht elastischen Material bestehen. Führungselemente können in den gegenüberliegenden Endbereichen der distalen Abschnitte vorgesehen sein, wobei ein Bereich hierzwischen frei von Führungselementen sein kann. Die Führungselemente können aus einem Bandmaterial bestehen, welches gemeinsam mit Randeinfassungen in Randbereichen der Polsterelemente vernäht sein kann.

Die Verstelleinrichtung des Brustriemens oder des Bauchriemens kann entlang des distalen Abschnitts zwischen benachbarten Führungselementen angeordnet sein.

Die Riemenverbindung, mittels welcher der Bauchriemen und der Brustriemen auf den gegenüberliegenden Geschirrseiten jeweils mit dem Schulterriemen verbunden sind, ist auf der Außenseite der Polsterelemente in einem Bereich angeordnet sein, in welchem der proximale Abschnitt und die distalen Abschnitte zusammengeführt sind.

Die Riemenverbindung kann den Bauchriemen und den Brustriemen nicht lösbar mit dem Schulterriemen verbinden. Bei dieser oder anderen Ausgestaltungen kann die Riemenverbindung mittels eines Rings gebildet sein, welcher eine jeweilige Schlaufe an den miteinander verbundenen Riemen durchgreift. Der Ring kann zum Beispiel aus Metall sein.

Die lösbare Verbindung, mittels welcher Abschnitte des Schulterriemens miteinander lösbar verbunden sind, kann eine Riemenschnalle und / oder einen Steckverschluss aufweisen. Die Riemenschnalle oder der Steckverschluss können aus einem Kunststoffmaterial oder Metall bestehen. Mit Hilfe der Riemenschnalle werden gegenüberliegende Enden von Abschnitten des Schulterriemens lösbar miteinander verbunden. Hierdurch kann beispielsweise das Anlegen oder Abnehmen des Hundegeschirrs am Körper des Hundes ermöglicht sein.

Die lösbare Verbindung kann unterhalb der Leinenbefestigung angeordnet sein. Eine solche Anordnung der lösbaren Verbindung unterhalb der Leinenbefestigung kann insbesondere dann gegeben sein, wenn die Leinenbefestigung mit Hilfe von Befestigungsringen gebildet ist, die an gegenüberliegenden Enden des Schulterriemens angebracht sind und beim Befestigen einer Leine von einem Befestigungsmittel an der Leine gemeinsam durchgriffen werden und so oberhalb der lösbaren Verbindung angeordnet sind, beispielsweise der Riemenschnalle bzw. dem Steckverschluss.

Die Leinenbefestigung kann mit zwei Befestigungsringen gebildet sein, die an gegenüberliegenden Enden der Abschnitte des Schulterriemens aufgenommen sind.

Es kann ein Zusatzriemen vorgesehen sein, der zwischen einem mittleren Abschnitt des Bauchriemens und einem mittleren Abschnitt des Brustriemens verläuft und hieran jeweils lösbar befestigt ist.

### Beschreibung von Ausführungsbeispielen

Nachfolgend werden weitere Ausführungsbeispiele unter Bezugnahme auf Figuren einer Zeichnung erläutert. Hierbei zeigen:
Fig. 1 eine Darstellung eines Hundegeschirrs von oben,
Fig. 2 eine Darstellung des Hundegeschirrs aus Fig. 1 von unten,
Fig. 3 eine Darstellung des Hundegeschirrs aus Fig. 1 von der Seite und
Fig. 4 eine Darstellung eines weiteren Hundegeschirrs von unten.

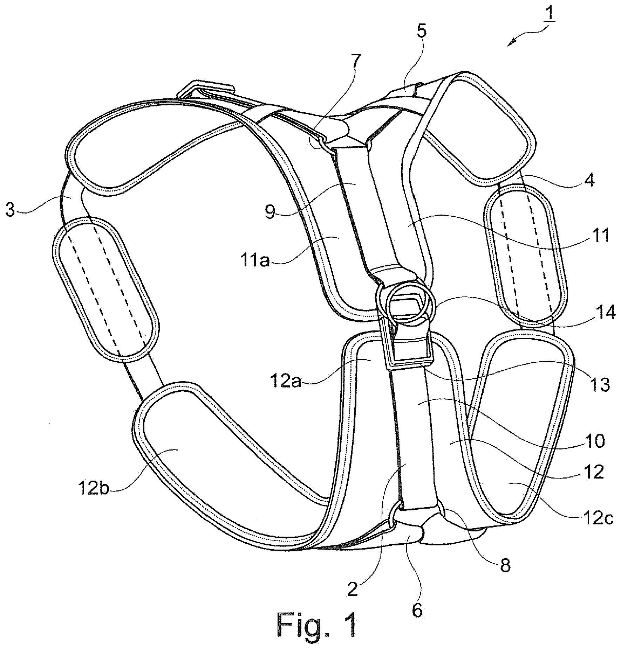

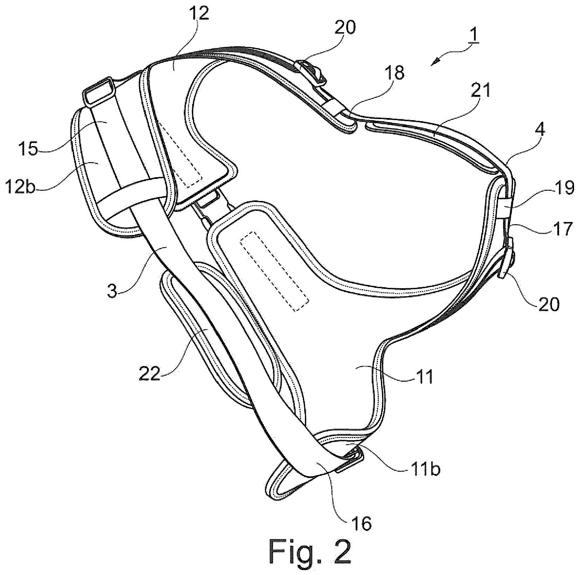

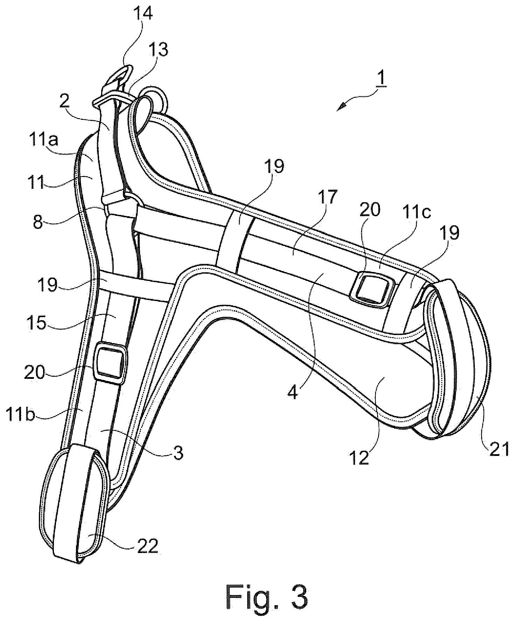

Fig. 1 bis 3 zeigen eine Darstellung eines Hundegeschirrs 1. Das Hundegeschirr 1 weist einen Schulterriemen 2, einen Bauchriemen 3 sowie einen Brustriemen 4 auf. Der Bauchriemen 3 und der Brustriemen 4 sind auf gegenüberliegenden Geschirrseiten 5, 6 jeweils mittels einer im dargestellten Ausführungsbeispiel als Ring ausgebildeten Riemenverbindung 7, 8 mit dem Schulterriemen 2 verbunden. Hierzu greift der Ring in eine jeweilige Endschlaufe an den beteiligten Riemen.

Abschnitte 9, 10 des Schulterriemens 2 sind auf proximalen Abschnitten 11a, 12a von Polsterelementen 11, 12 aufgenäht, so dass jeweils eine feste Verbindung hergestellt ist. Die Polsterelemente 11, 12 weisen eine Y-Form auf. Zwischen den beiden proximalen Abschnitten 11a, 12a des Schulterriemens 2 ist eine Riemenschnalle 13 zum lösbaren Verbinden angeordnet. Alternativ kann ein Steckverschluss vorgesehen sein. Weiterhin ist eine Leinenbefestigung 14 vorgesehen, die zum Anbinden einer Hundeleine dient und im gezeigten Ausführungsbeispiel mit zwei Metallringen ausgeführt ist, die an den gegenüberliegenden Abschnitten 9, 10 des Schulterriemens 2 angeordnet sind.

Im Unterschied zu den Abschnitten 9, 10 des Schulterriemens 2 auf der Außenseite der proximalen Abschnitte 11a, 12a der Polsterelemente 11, 12 sind Abschnitte 15, 16 des Bauchriemens 3 sowie Abschnitte 17, 18 des Brustriemens 4 auf der Außenseite von distalen Abschnitten 11b, 12b sowie weiteren distalen Abschnitten 11c, 12c der Polsterelemente 11, 12 freiliegend angeordnet. Der proximale Abschnitt 11a, 12a sowie die distalen und die weiteren distalen Abschnitte 11b, 12b, 11c, 12c der Polsterelemente 11, 12 bilden jeweils eine Y-Form.

Die Abschnitte 15, 16 des Bauchriemens 3 sowie die Abschnitte 17, 18 des Brustriemens 4 auf den distalen Abschnitten 11b, 12b, 11c, 12c der Polsterelemente 11, 12 sind mit Hilfe von Führungselementen 19 hierauf gesichert. Bei der gezeigten Ausführungsform sind die Führungselemente 19 an gegenüberliegenden Enden der distalen Abschnitte 11b, 12b, 11c, 12c gebildet. Zwischen den Führungselementen 19 weisen sowohl der Bauchriemen 3 wie auch der Brustriemen 4 jeweils eine Verstelleinrichtung 20 auf, die eingerichtet ist, die jeweilige Riemenlänge zu verstellen.

Am Bauchriemen 3 wie auch am Brustriemen 4 sind zusätzliche Polsterelemente 21, 22 vorgesehen, die an dem jeweiligen Riemen fest angeordnet sind, indem die zusätzlichen Polsterelemente 21, 22 angenäht sind.

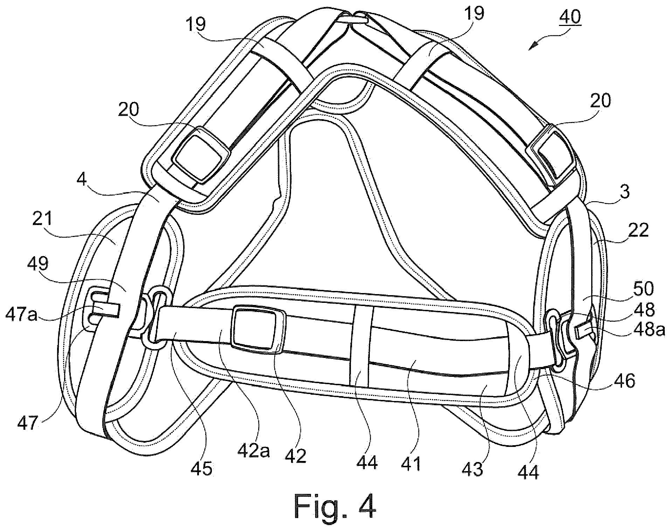

Fig. 4 zeigt eine Darstellung eines weiteren Hundegeschirrs 40 von unten. Bei der Ausführungsform in Fig. 4 wurden für die gleichen Merkmale dieselben Bezugszeichen wie in den Fig. 1 bis 3 verwendet. In Ergänzung weist das weitere Hundegeschirr 40 einen Zusatzriemen 41 auf, der sich zwischen dem Bauchriemen 3 und dem Brustriemen 4 erstreckt. Der Zusatzriemen 41 ist längenverstellbar, wozu eine weitere Verstelleinrichtung 42 vorgesehen ist, die vergleichbar der Verstelleinrichtung 20 ausgeführt sein kann und die gemäß Fig. 4 außenseitig auf einem zusätzlichen Polsterelement 43 angeordnet ist. Wenn das Hundegeschirr 40 am Körper des Hundes angelegt ist, verläuft der Zusatzriemen 41 zwischen den Vorderbeinen des Tiers.

Der Zusatzriemen 41 ist auf dem zusätzlichen Polsterelement 43 auf einer Seite 42a festgenäht. Im Übrigen ist der Zusatzriemen 41 auf dem zusätzlichen Polsterelement 43 freiliegend und verschiebbar angeordnet, insbesondere zur Längenverstellung. An dem zusätzlichen Polsterelement 43 ist der Zusatzriemen 41 mit Hilfe weiteren Führungselementen 44 in seiner freiliegenden Anordnung gesichert. Die weiteren Führungselementen 44 können vergleichbar den Führungselementen 19 ausgeführt sein.

An gegenüberliegenden Enden 45, 46 sind Befestigungseinrichtungen 47, 48 vorgesehen, die bei der dargestellten Ausführungsform mit Hakeneinrichtungen gebildet sind. Die Befestigungseinrichtungen 47, 48 können alternativ mit Schnallen und / oder Druckknöpfen ausgeführt sein, die ebenfalls eine lösbare Befestigung ermöglichen.

Die Befestigungseinrichtungen 47, 48 sind in der gezeigten Ausführung lösbar an Schlaufen 49, 50 des Bauchriemens 3 sowie des Brustriemens 4 lösbar befestigt. Die Befestigungseinrichtungen 47, 48 liegen hierbei auf der Außenseite der Polsterelemente 21, 22. Die Befestigungseinrichtungen sind jeweils mittels einer endseitigen Schlaufe an dem Zusatzriemen 41 aufgenommen.

Bei der dargestellten Ausführungsform sind Befestigungseinrichtungen 47, 48 unter dem Bauchriemen 3 sowie dem Brustriemen 4 durchgeschoben und wieder zurückgezogen, so dass ein Vorsprung 47a, 48a auf dem jeweiligen Riemen liegt.

Bei der dargestellten Ausführungsform erstreckt sich das zusätzliche Polsterelement 42 von gegenüberliegenden Rändern der Polsterelemente 21, 22, wenn der Zusatzriemen 41 in seiner kürzesten Längeneinstellung ist, was in Fig. 4 gezeigt ist.

Die Ausführung eines Hundegeschirrs mit dem lösbar am Bauchriemen 3 und am Brustriemen 4 befestigten Zusatzriemen 41 kann auch bei Hundegeschirren vorgesehen sein, die insbesondere hinsichtlich der Ausbildung der vorgesehenen Polsterelemente von dem Hundegeschirr in den Fig. 1 bis 4 verschieden ist. Allgemein weist ein solches Hundegeschirr einen Schulterriemen, Bauchriemen sowie einen Brustriemen auf, wobei zwischen dem Bauchriemen und dem Brustriemen ein Zusatzriemen verläuft, der sowohl am Brustriemen wie auch am Bauchriemen lösbar befestigt ist. Der Zusatzriemen kann längenverstellbar sein. Der Zusatzriemen kann hierbei zumindest in Abschnitten freiliegend auf einem zugeordneten Polsterelement angeordnet sein. Die verschiedenen Riemen können zumindest abschnittsweise lichtreflektierende Elemente aufweisen, zum Beispiel in Form eines Einfassbandes.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Hundegeschirr (1), mit:
- einem Schulterriemen (2), einem Bauchriemen (3) und einem Brustriemen (4), wobei der Bauchriemen (3) und der Brustriemen (4) auf gegenüberliegenden Geschirrseiten (5, 6) jeweils über eine Riemenverbindung (7, 8) mit dem Schulterriemen (2) verbunden sind,
- einer lösbaren Verbindung (13), mittels welcher Abschnitte des Schulterriemens (2) miteinander lösbar verbunden sind,
- einer Leinenbefestigung (14) an dem Schulterriemen (2), und
- Polsterelementen (11, 12), die eine Y-Form aufweisen und getrennt voneinander gebildet sind,
wobei
- auf der Außenseite in einem proximalen Abschnitt (11a, 12a) der Polsterelemente (11, 12) jeweils ein Abschnitt (9, 10) des Schulterriemens (2) fest angeordnet ist und die proximalen Abschnitte (11a, 12a) der Polsterelemente (11, 12) im Bereich des Schulterriemens (2) einander gegenüberliegend angeordnet sind,
- auf der Außenseite in einem distalen Abschnitt (11b, 12b) der Polsterelemente (11, 12), der sich von dem proximalen Abschnitt (11a, 12a) ausgehend erstreckt, jeweils ein Abschnitt (15, 16) des Bauchriemens (3) freiliegend angeordnet ist, und
- auf der Außenseite in einem weiteren distalen Abschnitt (11c; 12c) der Polsterelemente (11, 12), der sich von dem proximalen Abschnitt (11a, 12a) ausgehend erstreckt, jeweils ein Abschnitt (17, 18) des Brustriemens (4) freiliegend angeordnet ist,
- im distalen Abschnitt (11b, 12b) eines oder beider Polsterelemente (11, 12) auf der Außenseite an dem Brustriemen (4) und an dem Bauchriemen (3) jeweils eine Verstelleinrichtung (20) angeordnet ist, die eingerichtet ist, eine jeweilige Riemenlänge zu verstellen, und
- die Riemenverbindung (7, 8), mittels welcher der Bauchriemen (3) und der Brustriemen (4) auf den gegenüberliegenden Geschirrseiten (5, 6) jeweils mit dem Schulterriemen (2) verbunden sind, auf der Außenseite der Polsterelemente (11, 12) in einem Bereich angeordnet ist, in welchem der proximale Abschnitt (11a, 12a) und die distalen Abschnitte (11b, 12b; 11c, 12c) zusammengeführt sind.

2. Hundegeschirr (1) nach Anspruch 1, **gekennzeichnet durch** zusätzliche Polsterelemente (21, 22), die zwischen jeweils einander gegenüberliegenden distalen Abschnitten der Polsterelemente innenliegend (11, 12) an dem Brustriemen (4) sowie an dem Bauchriemen (3) angeordnet sind.

3. Hundegeschirr (1) nach Anspruch 2, **dadurch gekennzeichnet, dass** die zusätzlichen Polsterelemente (21, 22) an dem Brustriemen (4) sowie an dem Bauchriemen (3) fest angeordnet sind.

4. Hundegeschirr (1) nach mindestens einem der vorangehenden Ansprüche, **dadurch gekennzeichnet, dass** der freiliegend angeordnete Abschnitt (17, 18) des Brustriemens (4) und der freiliegend angeordnete Abschnitt (15, 16) des Bauchriemens (3) auf der Außenseite der Polsterelemente (11, 12) mittels Führungselementen (19) gesichert sind.

5. Hundegeschirr (1) nach Anspruch 4, **dadurch gekennzeichnet, dass** die Verstelleinrichtung (20) des Brustriemens (4) oder des Bauchriemens (3) entlang des distalen Abschnitts zwischen benachbarten Führungselementen (19) angeordnet ist.

6. Hundegeschirr (1) nach mindestens einem der vorangehenden Ansprüche, **dadurch gekennzeichnet, dass** die Riemenverbindung (7, 8) den Bauchriemen (3) und den Brustriemen (4) nicht lösbar mit dem Schulterriemen (2) verbindet.

7. Hundegeschirr (1) nach mindestens einem der vorangehenden Ansprüche, **dadurch gekennzeichnet, dass** die lösbare Verbindung (13), mittels welcher Abschnitte (9, 10) des Schulterriemens (2) miteinander lösbar verbunden sind, eine Riemenschnalle aufweist.

8. Hundegeschirr (1) nach mindestens einem der vorangehenden Ansprüche, **dadurch gekennzeichnet, dass** die lösbare Verbindung (13) unterhalb der Leinenbefestigung (14) angeordnet ist.

9. Hundegeschirr (1) nach mindestens einem der vorangehenden Ansprüche, **dadurch gekennzeichnet, dass** die Leinenbefestigung (14) mit zwei Befestigungsringen gebildet ist, die an gegenüberliegenden Enden der Abschnitte (9, 10) des Schulterriemens (2) aufgenommen sind.

10. Hundegeschirr (1) nach mindestens einem der vorangehenden Ansprüche, **gekennzeichnet durch** einen Zusatzriemen (41), der zwischen einem mittleren Abschnitt des Bauchriemens (3) und einem mittleren Abschnitt des Brustriemens (4) verläuft und hieran jeweils lösbar befestigt ist.

## Claims

1. A dog harness (1), having:
- a shoulder strap (2), a belly strap (3) and a chest strap (4), wherein the belly strap (3) and the chest strap (4) are each connected to the shoulder strap (2) via a strap connection (7, 8) on opposing harness sides (5, 6),
- a detachable connection (13), by means of which sections of the shoulder strap (2) are connected detachably to each other,
- a lead fastening (14) on the shoulder strap (2), and
- cushion elements (11, 12), which have a Y-shape and are formed separately from each other,
wherein
- in each case, a section (9, 10) of the shoulder strap (2) is arranged fixedly on the outside in a proximal section (11a, 12a) of the cushion elements (11, 12), and the proximal sections (11a, 12a) of the cushion elements (11, 12) are arranged opposite each other in the region of the shoulder strap (2),
- in each case, a section (15, 16) of the belly strap (3) is arranged freely on the outside in a distal section (11b, 12b) of the cushion elements (11, 12) which extends from the proximal section (11a, 12a), and
- in each case, a section (17, 18) of the chest strap (4) is arranged freely on the outside in a further distal section (11c; 12c) of the cushion elements (11, 12) which extends from the proximal section (11a, 12a),
- in each case, an adjustment means (20) is arranged in the distal section (11b, 12b) of one or both cushion elements (11, 12) on the outside on the chest strap (4) and on the belly strap (3), said adjustment means being designed to adjust a respective strap length, and
- the strap connection (7, 8), by means of which the belly strap (3) and the chest strap (4) are each connected to the shoulder strap (2) on the opposing harness sides (5, 6), is arranged on the outside of the cushion elements (11, 12) in a region in which the proximal section (11a, 12a) and the distal sections (11b, 12b; 11c, 12c) meet.

2. The dog harness (1) according to claim 1, **characterised by** additional cushion elements (21, 22), which are arranged on the inside (11, 12) on the chest strap (4) and on the belly strap (3) between opposing distal sections of the cushion elements, respectively.

3. The dog harness (1) according to claim 2, **characterised in that** the additional cushion elements (21, 22) are arranged fixedly on the chest strap (4) and on the belly strap (3).

4. The dog harness (1) according to at least one of the preceding claims, **characterised in that** the freely arranged section (17, 18) of the chest strap (4) and the freely arranged section (15, 16) of the belly strap (3) are secured on the outside of the cushion elements (11, 12) by means of guide elements (19).

5. The dog harness (1) according to claim 4, **characterised in that** the adjustment means (20) of the chest strap (4) or of the belly strap (3) is arranged between adjacent guide elements (19) along the distal section.

6. The dog harness (1) according to at least one of the preceding claims, **characterised in that** the strap connection (7, 8) connects the belly strap (3) and the chest strap (4) non-detachably to the shoulder strap (2).

7. The dog harness (1) according to at least one of the preceding claims, **characterised in that** the detachable connection (13) by means of which sections (9, 10) of the shoulder strap (2) are connected detachably to each other has a strap clasp.

8. The dog harness (1) according to at least one of the preceding claims, **characterised in that** the detachable connection (13) is arranged underneath the lead fastening (14) .

9. The dog harness (1) according to at least one of the preceding claims, **characterised in that** the lead fastening (14) is formed with two fastening rings which are held on opposing ends of the sections (9, 10) of the shoulder strap (2) .

10. The dog harness (1) according to at least one of the preceding claims, **characterised by** an additional strap (41) which runs between a central section of the belly strap (3) and a central section of the chest strap (4) and is respectively fastened detachably thereto.

## Revendications

1. Harnais pour chien (1), comprenant :
- une sangle d'épaule (2), une sangle ventrale (3) et une sangle de poitrine (4), la sangle ventrale (3) et la sangle de poitrine (4) étant assemblées sur des côtés opposés du harnais (5, 6) chaque fois par l'intermédiaire d'un assemblage par sangle (7, 8) avec la sangle d'épaule (2),
- un assemblage amovible (13), à l'aide duquel des parties de la sangle d'épaule (2) sont assemblées l'une à l'autre de manière amovible,
- une fixation pour laisse (14) sur la sangle d'épaule (2), et
- des éléments de rembourrage (11, 12), qui présentent la forme d'un Y et qui sont conçus séparément l'un de l'autre,
- sur la face extérieure, dans une partie proximale (11a, 12a) des éléments de rembourrage (11, 12), étant fixement placée chaque fois une partie (9, 10) de la sangle d'épaule (2) et les parties proximales (11a, 12a) des éléments de rembourrage (11, 12) étant placées en vis-à-vis mutuel, dans la région de la sangle d'épaule (2),
- sur la face extérieure, dans une partie distale (11b, 12b) des éléments de rembourrage (11, 12) qui s'étend en partant de la partie proximale (11a, 12a), chaque fois une partie (15, 16) de la sangle ventrale (3) étant placée librement, et
- sur la face extérieure, dans une autre partie distale (11c ; 12c) des éléments de rembourrage (11, 12), qui s'étend en partant de la partie proximale (11a, 12a), chaque fois une partie (17, 18) de la sangle de poitrine (4) étant placée librement,
- dans la partie distale (11b, 12b) de l'un ou des deux éléments de rembourrage (11, 12), sur la face extérieure sur la sangle de poitrine (4) et sur la sangle ventrale (3) étant placé chaque fois un système d'ajustage (20) qui est configuré pour ajuster une longueur de sangle respective, et
- l'assemblage par sangle (7, 8), à l'aide duquel la sangle ventrale (3) et la sangle de poitrine (4) sont assemblées sur les côtés opposés du harnais (5, 6) chaque fois avec la sangle d'épaule (2) étant placé sur la face extérieure des éléments de rembourrage (11, 12) dans une région dans laquelle la partie proximale (11a, 12a) et les parties distales (11b, 12b ; 11c, 12c) sont réunies.

2. Harnais pour chien (1) selon la revendication 1, **caractérisé par** des éléments de rembourrage (21, 22) supplémentaires, qui sont placés à l'intérieur (11, 12), entre chaque fois des parties distales en vis-à-vis mutuel des éléments de rembourrage sur la sangle de poitrine (4), ainsi que sur la sangle ventrale (3).

3. Harnais pour chien (1) selon la revendication 2, **caractérisé en ce que** les éléments de rembourrage (21, 22) supplémentaires sont fixement placés sur la sangle de poitrine (4), ainsi que sur la sangle ventrale (3).

4. Harnais pour chien (1) selon au moins l'une quelconque des revendications précédentes, **caractérisé en ce que** la partie (17, 18) librement placée de la sangle de poitrine (4) et la partie (15, 16) librement placée de la sangle ventrale (3) sont s sur la face extérieure des éléments de rembourrage (11, 12) à l'aide d'éléments de guidage (19).

5. Harnais pour chien (1) selon la revendication 4, **caractérisé en ce que** le système d'ajustage (20) de la sangle de poitrine (4) ou de la sangle ventrale (3) est placé le long de la partie distale, entre des éléments de guidage (19) voisins.

6. Harnais pour chien (1) selon au moins l'une quelconque des revendications précédentes, **caractérisé en ce que** l'assemblage par sangle (7, 8) relie de manière non amovible la sangle ventrale (3) et la sangle de poitrine (4) avec la sangle d'épaule (2).

7. Harnais pour chien (1) selon au moins l'une quelconque des revendications précédentes, **caractérisé en ce que** l'assemblage amovible (13) à l'aide duquel des parties (9, 10) de la sangle d'épaule (2) sont assemblées l'une à l'autre de manière amovible comporte une boucle de sangle.

8. Harnais pour chien (1) selon au moins l'une quelconque des revendications précédentes, **caractérisé en ce que** l'assemblage amovible (13) est placé en-dessous de la fixation pour laisse (14).

9. Harnais pour chien (1) selon au moins l'une quelconque des revendications précédentes, **caractérisé en ce que** la fixation pour laisse (14) est formée avec deux bagues de fixation qui sont logées sur des extrémités en vis-à-vis de la partie (9, 10) de la sangle d'épaule (2).

10. Harnais pour chien (1) selon au moins l'une quelconque des revendications précédentes, **caractérisé par** une sangle supplémentaire (41), qui s'étend entre une partie médiane de la sangle ventrale (3) et une partie médiane de la sangle de poitrine (4) et qui y est fixée de manière amovible.
